# EUROPEAN PATENT APPLICATION

(11) **EP 4 566 696 A1**
(43) Date of publication of application: **11.06.2025**
(21) Application number: 23849725.9
(22) Date of filing: 22.05.2023
(51) Int. Cl.: B01D 61/10, B01D 63/00, B01D 65/02, B01D 71/02, B01D 71/10, C02F 1/44, C02F 5/00, C02F 5/08, C02F 5/10, C02F 5/14

(54) **METHOD FOR OPERATING REVERSE OSMOSIS MEMBRANE DEVICE**

(30) Priority: 03.08.2022 JP 2022124183
(71) Applicant: Kurita Water Industries Ltd., Tokyo 164-0001 (JP); Shinshu University, Matsumoto-shi, Nagano 390-8621 (JP); Kitagawa Industries Co., Ltd., Inazawa-shi, Aichi 492-8446 (JP)
(72) Inventor: KAWAKATSU, Takahiro, Tokyo 164-0001 (JP); ISHII, Kazuki, Tokyo 164-0001 (JP); YASUIKE, Tomoharu, Tokyo 164-0001 (JP); ENDO, Morinobu, Nagano-shi Nagano 380-8553 (JP); TAKEUCHI, Kenji, Nagano-shi Nagano 380-8553 (JP); KITANO, Hiroki, Kasugai-shi Aichi 480-0303 (JP); FURUTA, Ken, Kasugai-shi Aichi 480-0303 (JP)
(74) Representative: Hoffmann Eitle
(86) International application number: PCT/JP2023/018900
(87) International publication number: WO 2024/029162

(57) **Abstract**

Provided is a method for operating a reverse osmosis membrane device which has a reverse osmosis membrane element and in which treated water is obtained by passing water to be treated that contains a scale component through the reverse osmosis membrane device, said method being characterized in that: the reverse membrane element includes a reverse osmosis membrane and a feed channel spacer; a dense layer of the reverse osmosis membrane contains carbon nanotubes and cellulose nanofibers; the feed channel spacer contains carbon nanotubes; and a scale dispersant is added to the water to be treated.

## Description

### Technical Field

The present invention relates to a method for operating a reverse osmosis membrane device for treating water to be treated which contains a scale component with the reverse osmosis membrane device.

### Related Art

Reverse osmosis membrane systems are widely used for desalination of seawater and brackish water, production of industrial water and ultrapure water, wastewater recovery, etc. As reverse osmosis membrane devices continue to operate, scales such as calcium salts and silica adhere to the reverse osmosis membranes.

Operation under acidic conditions is known as a method for suppressing adhesion of calcium scale and silica scale to the reverse osmosis membrane. By operating with supply water having a pH around 5, the formation rate of calcium scale and silica scale slows down, and the membrane performance stabilizes. However, this method requires addition of an acidic agent to the supply water, and an alkaline agent is necessary to return the pH of concentrated water and permeated water to neutral, resulting in chemical costs. There is also a problem that the blocking performance of the reverse osmosis membrane deteriorates under acidic conditions.

Patent Literatures 1 and 2 describe suppressing scale adhesion to the reverse osmosis membrane by setting the Langelier index of the supply water to a value that makes scale formation difficult and performing flushing periodically. However, the methods of Patent Literatures 1 and 2 require an operation to change the Langelier index of the supply water.

Patent Literature 3 describes a reverse osmosis membrane that includes carbon nanotubes and cellulose nanofibers in the dense layer. Patent Literature 4 describes a feed channel spacer that includes carbon nanotubes.

### Citation List

### Patent Literatures

Patent Literature 1: Japanese Patent Application Laid-Open No. 2015-160179
Patent Literature 2: Japanese Patent Application Laid-Open No. 2016-179442
Patent Literature 3: Japanese Patent No. 6999958
Patent Literature 4: International Publication No. 2019/131917

### SUMMARY OF INVENTION

### Problems to be Solved by the Invention

The present invention aims to provide a method for operating a reverse osmosis membrane device that is capable of suppressing scale adhesion to a reverse osmosis membrane (hereinafter, may be referred to as RO membrane) and stabilizing membrane performance. Means for Solving the Problems

As a result of investigating methods to suppress formation of calcium fluoride scale and silica scale and adhesion to RO membranes, the inventors of the present invention discovered that RO membrane fouling due to scale can be significantly reduced by passing dispersant-added water to be treated through a reverse osmosis membrane device having a membrane element that combines an RO membrane including carbon nanotubes and cellulose nanofibers with a feed channel spacer including carbon nanotubes. The inventors also discovered that RO membrane fouling can be further reduced by performing flushing that supplies water to be treated or other water to the concentration side without pressurization.

The present invention is based on such findings, and has essence as follows.
[1] A method for operating a reverse osmosis membrane device which includes a reverse osmosis membrane element and obtains treated water by passing water to be treated that includes a scale component through the reverse osmosis membrane device,
   in which the reverse osmosis membrane element includes a reverse osmosis membrane and a feed channel spacer,
   a dense layer of the reverse osmosis membrane includes carbon nanotubes and cellulose nanofibers, and
   the feed channel spacer includes carbon nanotubes,
   the method for operating the reverse osmosis membrane device including:
      adding a scale dispersant to the water to be treated.
[2] The method for operating the reverse osmosis membrane device according to [1], including performing flushing periodically.
[3] The method for operating the reverse osmosis membrane device according to [1] or [2], in which the water to be treated includes at least one of calcium fluoride, calcium carbonate, and silica as the scale component.
[4] The method for operating the reverse osmosis membrane device according to any one of [1] to [3], in which the scale dispersant has a phosphate group or a sulfonic acid group.
[5] The method for operating the reverse osmosis membrane device according to [4], in which the scale dispersant is 2-phosphonobutane-1,2,4-tricarboxylic acid.
[6] The method for operating the reverse osmosis membrane device according to any one of [1] to [5], in which an addition amount of the scale dispersant is 0.5 mg/L to 20 mg/L.

### Effects of Invention

According to the present invention, the adhesion of scale to the RO membrane is suppressed, and the performance of the reverse osmosis membrane device can be stabilized.

In the present invention, the mechanism by which scale adhesion is suppressed is presumed to be as follows.
(1) Carbon nanotubes and cellulose nanofibers are not hydrophilic materials, and bring about a slipping effect with respect to the water to be treated.
(2) The scale component is concentrated by the RO membrane, and scale nuclei are generated near the membrane surface of the reverse osmosis membrane. However, due to the above-mentioned slipping effect, it becomes difficult for the scale nuclei to remain on the membrane surface of the reverse osmosis membrane. Thus, scale adhesion to the reverse osmosis membrane is suppressed.
(3) By adding the dispersant, the generation of nuclei of the scale component is suppressed, thereby reducing membrane fouling caused by scale.
(4) Scale nuclei remaining on the membrane surface are discharged by flushing.

### BRIEF DESCRIPTION OF DRAWINGS

[FIG. 1] is an explanatory diagram of the flow in the example.
[FIG. 2] is a graph showing the result of the example.

### DESCRIPTION OF EMBODIMENTS

The water to be treated, which is the target of treatment in the present invention, includes a scale component such as calcium fluoride, calcium carbonate, and silica in an amount of 1 mg/L to 200 mg/L, particularly about 10 mg/L to 100 mg/L.

Patent Literature 3 mentioned above describes a suitable reverse osmosis membrane for the reverse osmosis membrane device used in the operation method of the present invention.

In other words, this reverse osmosis membrane is preferably a semi-permeable composite membrane provided with a semi-permeable membrane formed by coating a mixed solution of a first aqueous dispersion including carbon nanotubes and a second aqueous dispersion including cellulose nanofibers on a porous support, as described in Patent Literature 3. The semi-permeable membrane includes cross-linked polyamide, carbon nanotubes, and cellulose nanofibers. The thickness of the semi-permeable membrane in the semi-permeable composite membrane is preferably about 10 nm to 200 nm.

The carbon nanotubes preferably have an average diameter (fiber diameter) of 5 nm or more and 30 nm or less. As for the cellulose nanofibers, cellulose microfibers having an average fiber diameter of 3 nm to 200 nm are preferable. The aspect ratio (fiber length/fiber diameter) of the cellulose nanofibers is preferably 10 to 1000.

The polyamide is preferably aromatic polyamide.

The proportion of the carbon nanotubes in the total amount of polyamide, carbon nanotubes, and cellulose nanofibers is preferably 1% by mass to 30% by mass, and the proportion of the cellulose nanofibers is preferably 1% by mass to 23.6% by mass.

Polysulfone, polyethersulfone, cellulose acetate, polyvinyl chloride, polyacrylonitrile, polyphenylene sulfide, polyphenylene sulfide sulfone, and the like can be used as the material for the porous support.

A manufacturing method of the semi-permeable composite membrane preferably includes a process of obtaining a mixed solution including carbon nanotubes, cellulose nanofibers, and an amine component, preferably an aromatic amine component; and a process of obtaining a semi-permeable composite membrane by bringing the mixed solution into contact with a porous support and then performing a cross-linking reaction using a cross-linking agent on the amine component in the mixed solution adhered to the porous support. The process of obtaining the mixed solution includes a process of mixing a first aqueous dispersion including carbon nanotubes and a second aqueous dispersion including cellulose nanofibers.

As the aromatic amine, at least one aromatic polyfunctional amine selected from the group consisting of m-phenylenediamine, p-phenylenediamine, 1,3,5-triaminobenzene, 1,2,4-triaminobenzene, 3,5-diaminobenzoic acid, 2,4-diaminotoluene, 2,4-diaminoanisole, amidol, xylylenediamine, N-methyl-m-phenylenediamine, and N-methyl-p-phenylenediamine is preferable. These may be used alone or in combination of two or more types.

As the cross-linking agent, an organic solvent solution including acid chloride components such as trimesic acid chloride, terephthalic acid chloride, isophthalic acid chloride, and biphenyldicarboxylic acid chloride, for example, can be used. In addition to the cross-linking agent, a basic catalyst for capturing hydrochloric acid generated as a by-product in interfacial polymerization is included. Examples of the basic catalyst include triethylamine, pyridine, and the like.

In the process of obtaining the semi-permeable composite membrane, the mixed solution obtained in the process of obtaining the mixed solution is coated on the porous support to form a membrane. Subsequently, a solution including the cross-linking agent is further applied on top of this membrane, and a polycondensation reaction is induced to perform cross-linking. After heat drying, the membrane is washed with distilled water to form the semi-permeable membrane.

The mixed solution is preferably applied to the porous support uniformly using a bar coater or the like.

The feed channel spacer of the reverse osmosis membrane device used in the method for operating the reverse osmosis membrane device of the present invention is preferably a mesh-shaped water treatment feed channel spacer composed of a molded product including polypropylene resin and carbon nanotubes, as described in Patent Literature 4. The blending ratio of the carbon nanotubes is preferably 5.3 parts by mass to 18 parts by mass with respect to 100 parts by mass of the polypropylene resin.

The carbon nanotubes used in this feed channel spacer preferably have a structure similar to a cylindrically wound graphene sheet, with a diameter ranging from several nm to several tens of nm, and a length of several tens to several thousands times the diameter. Carbon nanotubes are classified into single-walled carbon nanotubes in which the graphene sheet is substantially a single layer, and multi-walled carbon nanotubes in which there are two or more layers. Any of single-walled carbon nanotubes and multi-walled carbon nanotubes may be used as the carbon nanotubes.

The water treatment feed channel spacer is molded into a mesh shape utilizing a predetermined mold. For example, the water treatment feed channel spacer is manufactured by the method described in the example of Patent Literature 4.

The feed channel spacer in the example of Patent Literature 4 is composed of a mesh-shaped molded product manufactured by molding a composition that includes polypropylene resin and carbon nanotubes.

A scale dispersant having phosphate groups or sulfonic acid groups is suitable as the scale dispersant used in the present invention, and inorganic polyphosphoric acids such as sodium hexametaphosphate and sodium tripolyphosphate, phosphonic acids such as hydroxyethylidene diphosphonic acid and phosphonobutane tricarboxylic acid, and the like are particularly suitable.

Additionally, a polymer-based scale dispersant having sulfonic acid groups and carboxyl groups is also suitable as the scale dispersant.

Examples of the polymer having sulfonic acid groups and carboxyl groups include copolymers of monomers having sulfonic acid groups and monomers having carboxyl groups, or terpolymers of these monomers and other monomers capable of copolymerizing with these.

Examples of the monomers having sulfonic acid groups include conjugated diene sulfonic acids such as 2-methyl-1,3-butadiene-1-sulfonic acid, unsaturated (meth)allyl ether-based monomers having sulfonic acid groups such as 3-(meth)allyloxy-2-hydroxypropanesulfonic acid, 2-(meth)acrylamide-2-methylpropanesulfonic acid, 2-hydroxy-3-acrylamidopropanesulfonic acid, styrenesulfonic acid, methallylsulfonic acid, vinylsulfonic acid, allylsulfonic acid, isoamylenesulfonic acid, or salts of these. 3-allyloxy-2-hydroxy-1-propanesulfonic acid (HAPS) and 2-acrylamide-2-methylpropanesulfonic acid (AMPS) are preferable. These may be used individually or in a mixture of two or more types.

Examples of the monomers having carboxyl groups include acrylic acid (AA), methacrylic acid, crotonic acid, isocrotonic acid, vinyl acetic acid, atropic acid, maleic acid, fumaric acid, itaconic acid, hydroxyethyl acrylic acid, or salts of these. Acrylic acid and methacrylic acid are preferable.

Additionally, examples of the monomers capable of copolymerizing with these monomers include alkenes such as isobutylene, and amides such as N-tert-butylacrylamide (N-tBAA) and N-vinylformamide.

The weight average molecular weight of the polymer-based scale dispersant is preferably 1,000 to 50,000.

In the present invention, the addition amount of the scale dispersant to be added to the water to be treated is preferably 0.5 mg/L to 20 mg/L, particularly 1 mg/L to 10 mg/L.

In the present invention, membrane fouling of the reverse osmosis membrane can be further reduced by performing flushing periodically.

It should be noted that flushing refers to an operation in which, while continuing the operation of the water supply pump, the opening/closing valve of the concentrated water discharge piping is opened, allowing most of the RO supply water to flow on the primary side (concentrated water side) of the membrane without permeating through the membrane, and discharging the RO supply water outside the system from the concentrated water discharge piping. In this case, since most of the RO supply water does not permeate through the membrane, almost the entire amount of the supplied water flows along the membrane surface on the primary side, resulting in a faster flow rate and a larger amount of water flowing compared to the normal operation when permeated water is collected. This makes it possible to effectively wash away contaminants blocking the membrane surface.

The frequency of flushing is not particularly limited and is appropriately determined according to the water quality of the water to be treated, RO treatment conditions, etc. However, preferably, flushing is usually performed for about 1 minute to 60 minutes at a rate of once every few hours to 10 days.

### Examples

### [Example 1, Comparative Examples 1 and 2]

### <Overview>

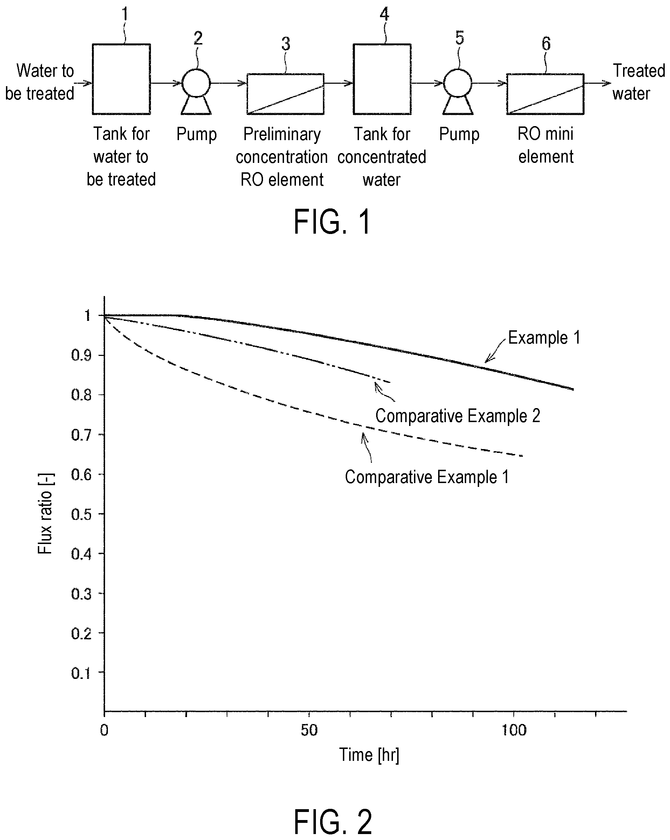

With use of the reverse osmosis membrane system shown in FIG. 1, the time-dependent change in flux was measured by using the following as the reverse osmosis membrane element and passing the following water to be treated.

### <Water to be treated>

The following chemicals were mixed, and the pH was adjusted to 5.5 with hydrochloric acid and sodium hydroxide.
Calcium chloride dihydrate (special grade, FUJIFILM Wako Pure Chemical Corporation): 294 mg/L
Sodium fluoride (special grade, FUJIFILM Wako Pure Chemical Corporation): 24 mg/L
2-Phosphonobutane-1,2,4-tricarboxylic acid (PBTC, LANXESS): 2.5 mg/L

### <Membrane element of Example 1>

A spiral-type reverse osmosis membrane element with the following configuration using an RO membrane manufactured by the RO membrane manufacturing method described below, which includes carbon nanotubes and cellulose nanofibers in the dense layer as described in Example 1 of Patent Literature 3, and a feed channel spacer including carbon nanotubes manufactured by the feed channel spacer manufacturing method described below as disclosed in Patent Literature 4. Membrane area: 1300 cm², element diameter: 5 cm, and element axial length: 30 cm.

### <<RO membrane manufacturing method>>

According to Example 1 of Patent Literature 3, the RO membrane was manufactured by the following processes (1) to (5).

### (1) Process of obtaining the first aqueous dispersion:

After manually stirring (first mixing process) 2 g of multi-walled carbon nanotubes (FT9110 manufactured by Cnano, average diameter 15 nm (the average diameter is the arithmetic mean of more than 200 measurements using scanning electron microscope imaging)) in 10 g of distilled water, the mixture was fed into a three-roll mill (EXAKT M-50 I manufactured by Nagase Screen Printing Research Co., Ltd.) with a roll diameter of 50 mm (roll temperature 25°C or higher and 40°C or lower) and kneaded (second mixing process) for 3 minutes or more and 10 minutes or less to obtain the first aqueous dispersion. The roll gap was 0.001 mm or more and less than 0.01 mm, the roll speed ratio was V1=1, V2=1.8, and V3=3.3, and the roll speed V3 was 1.2 m/s peripheral speed.

### (2) Process of obtaining the second aqueous dispersion:

A cellulose nanofiber (TEMPO-oxidized cellulose nanofiber) aqueous dispersion was diluted with water to prepare an aqueous dispersion of cellulose nanofibers with a concentration of 0.4% by mass. This aqueous dispersion was mixed using a juicer mixer (blender MX1200XTX manufactured by Waring) by high-speed stirring at a rotation speed of 20,000 rpm for 30 seconds to obtain the second aqueous dispersion including cellulose nanofibers.

### (3) Process of obtaining the mixed solution (coating solution):

105 g of additive (aqueous solution including 10% by mass of TEA (triethylamine) and 20% by mass of CSA (camphor sulfonic acid)), and 0.45 g of SLS (sodium lauryl sulfate) were added to 100 g of distilled water, and stirred and dissolved using a magnetic stirrer. Then, 1.8 g of the first aqueous dispersion including 16.7% by mass of carbon nanotubes obtained earlier was added and stirred. Furthermore, 10.5 g of m-phenylenediamine and 18 g of IPA (isopropyl alcohol) were added and stirred to dissolve. Separately, a necessary amount of the second aqueous dispersion including 0.4% by mass of cellulose nanofibers in 100 g of distilled water was measured out and stirred using a magnetic stirrer. To this, 105 g of additive (aqueous solution including 10% by mass of TEA and 20% by mass of CSA) and 0.45 g of SLS were added and stirred using a magnetic stirrer. Then, 10.5 g of m-phenylenediamine and 18 g of IPA were added and stirred. These two solutions were mixed and stirred together, and the total volume was adjusted to 600 g with distilled water. The resulting solution was stirred using a magnetic stirrer to obtain a mixed solution (coating solution) including 3.5% by mass of m-phenylenediamine, 3.5% by mass of TEA, 0.15% by mass of SLS, 7% by mass of CSA, 6% by mass of IPA, and carbon nanotubes and cellulose nanofibers.

The concentration of carbon nanotubes in the mixed solution was 0.05% by mass. The concentration of cellulose nanofibers in the mixed solution was 0.003% by mass.

### (4) Preparation of the porous support:

A wet non-woven fabric with an air permeability of 0.7 cm³/cm²·second and an average pore size of 7 µm or less, composed of blended yarn of polyester fibers with a single fiber fineness of 0.5 decitex and polyester fibers with 1.5 decitex, and measuring 30 cm vertically and 20 cm horizontally, was fixed on a glass plate. On top of this, a polysulfone solution with a concentration of 15% by weight in dimethylformamide (DMF) solvent (at 20°C) was cast to achieve a total thickness of 210 µm to 215 µm. The cast layer was immediately immersed in water to manufacture a porous support of polysulfone.

### (5) Process of obtaining the RO membrane:

On an 80 cm² porous support, the mixed solution (coating solution) prepared in (3) above was applied to the surface of the porous support at a speed of 10 mm/s using a bar coater (#6 wired bar). After removing excess aqueous solution from the surface of the porous support with a rubber blade, 4 ml of room temperature IP solvent solution including 0.18% by mass of trimesic acid chloride was applied to completely wet the membrane surface. To remove excess solution from the membrane, the membrane surface was held vertically to drain, and then dried for 3 minutes in a constant temperature bath at 120°C. Subsequently, the membrane was immersed and washed in distilled water to manufacture the RO membrane.

### <<Manufacturing method of feed channel spacer>>

According to Example 1 of Patent Literature 4, a composition including 18 parts by mass of carbon nanotubes with respect to 100 parts by mass of polypropylene resin was molded using a predetermined mold to manufacture a mesh-shaped molded product. The mesh opening was about 4 mm vertically and about 4 mm horizontally, the line diameter was about 0.4 mm, and the mesh thickness was about 0.7 mm.

### <Membrane element of Comparative Example 1>

A membrane element identical to Example 1 except that the feed channel spacer used in the membrane element of Comparative Example 2 was used as the feed channel spacer.

### <Membrane element of Comparative Example 2>

A commercially available RO mini element (TW30-2012-125, DOW).

### <RO element for performing preliminary concentration>

Six ES202 inch RO elements (manufactured by Nitto Denko Corporation) were used.

### <Experimental procedure>

FIG. 1 shows an overview of the water permeation experimental apparatus. The above-mentioned water to be treated, including calcium chloride, sodium fluoride, and PBTC, passed through a preliminary concentration RO element 3 from a tank 1 for water to be treated by a pump 2, and concentrated 5 times. The concentrated water passed through an RO mini element 6 from a tank 4 for concentrated water by a pump 5, and the time-dependent change in permeate water flux was measured. The water temperature was 31°C to 34°C.

### <Result>

FIG. 2 shows the time-dependent change in flux ratio (value obtained by dividing the measured flux by the initial flux).

As shown in FIG. 2, it can be observed that Comparative Example 2 maintains a higher flux ratio than Comparative Example 1, but Example 1 maintains an even higher flux ratio over a longer period of time.

The present invention has been described in detail using specific embodiments, but it is clear to those skilled in the art that various modifications are possible without departing from the spirit and scope of the present invention.

The present application is based on Japanese Patent Application No. 2022-124183 filed on August 3, 2022, the entirety of which is incorporated herein by reference.

### Reference Signs List

1 tank for water to be treated
3 preliminary concentration RO element
6 RO mini element

## Claims

1. A method for operating a reverse osmosis membrane device which comprises a reverse osmosis membrane element and obtains treated water by passing water to be treated that comprises a scale component through the reverse osmosis membrane device,
wherein the reverse osmosis membrane element comprises a reverse osmosis membrane and a feed channel spacer,
a dense layer of the reverse osmosis membrane comprises carbon nanotubes and cellulose nanofibers, and
the feed channel spacer comprises carbon nanotubes,
the method for operating the reverse osmosis membrane device comprising:
adding a scale dispersant to the water to be treated.

2. The method for operating the reverse osmosis membrane device according to claim 1, comprising performing flushing periodically.

3. The method for operating the reverse osmosis membrane device according to claim 1, wherein the water to be treated comprises at least one of calcium fluoride, calcium carbonate, and silica as the scale component.

4. The method for operating the reverse osmosis membrane device according to claim 1, wherein the scale dispersant has a phosphate group or a sulfonic acid group.

5. The method for operating the reverse osmosis membrane device according to claim 1, wherein the scale dispersant is 2-phosphonobutane-1,2,4-tricarboxylic acid.

6. The method for operating the reverse osmosis membrane device according to any one of claims 1 to 5, wherein an addition amount of the scale dispersant is 0.5 mg/L to 20 mg/L.
